# FASCICULE DE BREVET EUROPEEN

(11) **EP 1 336 061 B1**
(45) Date de publication et mention de la délivrance du brevet: **28.04.2004**
(21) Numéro de dépôt: 01982544.7
(22) Date de dépôt: 24.10.2001
(51) Int. Cl.: F16L 33/01, F16L 33/00

(54) **EMBOUT POUR CONDUITE FLEXIBLE**
ARMATUR FUER EINEN SCHLAUCH
END-FITTING FOR FLEXIBLE PIPE

(30) Priorité: 08.11.2000 FR 0014338
(43) Date de publication de la demande: 20.08.2003
(73) Titulaire: TECHNIP FRANCE, 92400 Courbevoie (FR)
(72) Inventeur: BUON, Eric, F-76130 Mont-Saint-Aignan (FR); BERTON, Hugues, Western Australia 6153 (AU)
(74) Mandataire: Bertrand, Didier
(86) Numéro de dépôt international: PCT/FR2001/003305
(87) Numéro de publication internationale: WO 2002/039003

(56) Documents cités:
- WO-A-99/19654
- FR-A- 1 054 274
- US-A- 2 610 869
- US-A- 5 639 128

## Description

La présente invention concerne un embout pour conduite flexible pour véhiculer sur de grandes distances un fluide sous pression et le cas échéant sous haute température, tel qu'un gaz, du pétrole, de l'eau ou d'autres fluides. L'invention vise tout particulièrement un embout pour une conduite destinée à une exploitation pétrolière en mer.

Les conduites flexibles utilisées en mer doivent pouvoir résister à des pressions internes et/ou à des pressions externes fortes et supporter également des flexions longitudinales ou des torsions sans risque de rupture.

Elles présentent des configurations variées en fonction de leur utilisation précise mais répondent en général aux critères constructifs définis notamment dans les recommandations API 17 B et API 17 J établies par l'American Petroleum Institute sous l'intitulé "Recommended Practice for Flexible Pipe" and "Specification for Unbonded Flexible Pipe".

Une conduite flexible comprend généralement de l'intérieur vers l'extérieur :
- une gaine d'étanchéité interne, réalisée en matière plastique généralement polymère, résistant à l'action chimique du fluide à transporter ;
- une voûte de pression résistant principalement à la pression développée par le fluide dans la gaine d'étanchéité et constituée par l'enroulement en hélice à pas court (c'est-à-dire avec un angle d'enroulement voisin de 90°) autour de la gaine interne, d'un ou plusieurs fils métalliques de forme agrafés (auto-agrafables ou non) ; les fils de forme ont une section en Z ou en T ou leurs dérivés (teta ou zeta), en U, ou en I ;
- au moins une nappe (et généralement au moins deux nappes croisées) d'armures de traction enroulées à pas long, c'est-à-dire dont l'angle d'armage mesuré sur l'axe longitudinal de la conduite est inférieur à 55° ; et
- et une gaine de protection et d'étanchéité externe en polymère.

Une telle conduite, à passage interne lisse puisque formé par la gaine d'étanchéité, est dite " smooth bore".

Dans une conduite à passage non-lisse, dite "rough bore", on prévoit en outre à l'intérieur de la gaine d'étanchéité interne une carcasse constituée d'un feuillard agrafé qui sert à empêcher l'écrasement (en anglais "collapse") de la conduite sous pression externe. La voûte de pression participe néanmoins aussi à la résistance à l'écrasement.

Par ailleurs, les conduites peuvent comprendre une gaine intermédiaire ou anti-écrasement (anti-"collapse") disposée entre la voûte de pression et la première nappe d'armures ou entre deux nappes d'armures pour empêcher qu'en cas de percement de la gaine externe, l'eau de mer ne vienne s'infiltrer jusqu'à la gaine interne et détériore les performances mécaniques de la conduite flexible.

Les embouts de conduite, également définis dans les recommandations API 17J, doivent être réalisés dans des conditions assurant à la fois une bonne solidarisation et une bonne étanchéité. Celles-ci sont généralement obtenues par un sertissage de la gaine, c'est-à-dire par une pénétration radiale partielle d'un élément rigide dans la gaine

On connaît plusieurs types d'embouts pour les conduites flexibles utilisant le principe du sertissage de la gaine interne. Par exemple, le document WO 99/19654 montre un anneau cerclé autour de la gaine interne, cet anneau ayant soit deux joints toriques soit deux nervures pour assurer l'étanchéité. Dans le document US 5 639 128, qui concerne une conduite "rough bore", une canule est insérée entre la carcasse et la gaine interne de manière à servir d'appui radial à la gaine lors du sertissage, et la gaine est sertie par une bague déformable de sertissage, qui lorsqu'elle est poussée axialement coopère avec une butée tronconique et se déforme radialement vers l'intérieur, pénètre dans la gaine pour la bloquer et assurer son étanchéité. Une telle bague est aussi appelée monocône. Cependant ces documents ne concernent pas des conduites dotées d'une gaine intermédiaire qu'il s'agit aussi de sertir de manière étanche.

La Demanderesse a déjà développé un embout permettant le sertissage de la gaine intérieure et le sertissage de la gaine intermédiaire. L'embout comporte une pièce étagée pouvant coulisser dans un logement cylindrique étagé de l'embout, cette pièce formant un bicône, c'est-à-dire comportant à ses deux extrémités axiale une bague intégrale (ou lèvre) de sertissage ; le bicône assure, lors d'une compression axiale entraînant la déformation des bagues, à l'avant la fixation étanche de la gaine interne en coopération avec une canule effilée et à l'arrière la fixation étanche de la gaine intermédiaire en coopération avec la voûte de pression de la conduite, des vis permettant d'exercer ladite compression axiale et le rapprochement et la fixation de la pièce étagée sur l'embout.

Cette réalisation donne globalement satisfaction, mais il s'avère à l'usage que la fabrication n'est pas simple car il s'agit de réaliser sur la pièce étagée de nombreux ajustements de contact très précis, le montage n'en est pas simple surtout si l'on songe qu'il s'agit de conduite et d'embout de fort diamètre (par exemple une quarantaine de centimètres) et de poids élevé et que les imperfections de réalisation peuvent bloquer ou rendre difficile l'ajustement de la pièce étagée, et surtout qu'il est très difficile de tester l'étanchéité des deux sertissages de gaine. Or, pour des raisons de sécurité, un tel test préalable est de plus en plus souvent demandé par les utilisateurs.

Le but de l'invention est donc d'améliorer l'embout existant en proposant une construction qui permette d'une part un montage plus facile et d'autre part puisse faire l'objet de tests d'étanchéité.

L'invention telle que définie dans la revendication indépendante atteint son but grâce à un embout de fixation pour une conduite tubulaire flexible comprenant, de l'intérieur vers l'extérieur : une gaine d'étanchéité interne réalisée en matière plastique, généralement polymère, une voûte de pression constituée par l'enroulement en hélice à pas court d'un fil de forme métallique, une gaine d'étanchéité intermédiaire et au moins une nappe d'armures de traction enroulées à pas long et une gaine de protection et d'étanchéité externe, l'embout comportant une pièce étagée pouvant coulisser dans un logement cylindrique étagé de l'embout et destinée à assurer, grâce à deux éléments déformables de sertissage, à l'avant la fixation étanche de la gaine interne (en coopération avec un élément d'appui, comme une canule effilée dans le cas des conduites "smooth bore" ou la carcasse elle-même dans le cas des conduites "rough bore") et à l'arrière la fixation étanche de la gaine intermédiaire, des vis permettant le rapprochement et la fixation de la pièce étagée sur l'embout, caractérisé en ce que la pièce étagée et les éléments déformables sont réalisés sous forme de pièces distinctes, à savoir la pièce étagée et deux bagues séparées de sertissage. D'une part leur montage s'en trouve facilité, mais surtout il est possible d'installer des moyens de contrôle de l'étanchéité au cours du montage.

Avantageusement, la bague déformable arrière est serrée sur la gaine intermédiaire par le serrage d'une bride sur la pièce étagée au moyen de vis, ces vis étant différentes des vis de serrage de la pièce étagée sur l'embout, et permettant de mettre en place le sertissage de la gaine intermédiaire à l'arrière avant le sertissage de la gaine intérieure à l'avant.

Avantageusement, la bague déformable arrière appartient à un bicône possédant une autre bague déformable à l'avant destinée à s'enfoncer également dans la gaine intermédiaire. Le bicône présente un orifice radial pour le contrôle de l'étanchéité entre les deux bagues déformables du bicône. De préférence, il est également prévu un joint torique d'étanchéité entre la bride et la pièce étagée pour éviter les fuites au moment du test d'étanchéité. Grâce à ces dispositions, il est facile de réaliser dans une première étape le sertissage de la gaine intermédiaire et d'en contrôler l'étanchéité, avant de passer au sertissage de la gaine intérieure.

Avantageusement, il est aussi prévu deux joints toriques d'étanchéité entre la pièce étagée et l'embout ainsi qu'un orifice radial de contrôle de l'étanchéité entre ces joints, l'un de ces joints servant de joint d'arrêt pour pallier les éventuelles fuites pouvant apparaître entre la pièce étagée et la voûte de l'embout et l'autre joint ne servant que pour la procédure de test d'étanchéité afin de contrôler l'étanchéité du joint d'arrêt.

L'invention s'applique dès lors qu'il s'agit de sertir une gaine intérieure et une gaine intermédiaire et concerne les conduites "smooth bore" et les conduites "rough bore".

D'autres avantages et caractéristiques seront mis en évidence à la lecture de la description qui suit, en référence aux dessins schématiques annexés sur lesquels :
Les figures 1 et 2 sont des vues en perspective de conduite de type respectif "smooth bore" et "rough bore" auxquelles peut s'appliquer l'invention,
La figure 3 est une vue en coupe longitudinale d'un embout déjà développé par la Demanderesse,
Les figures 4 et 5 sont des vues en coupe longitudinale d'un embout conforme à l'invention, respectivement à une étape intermédiaire de montage et à l'étape finale.

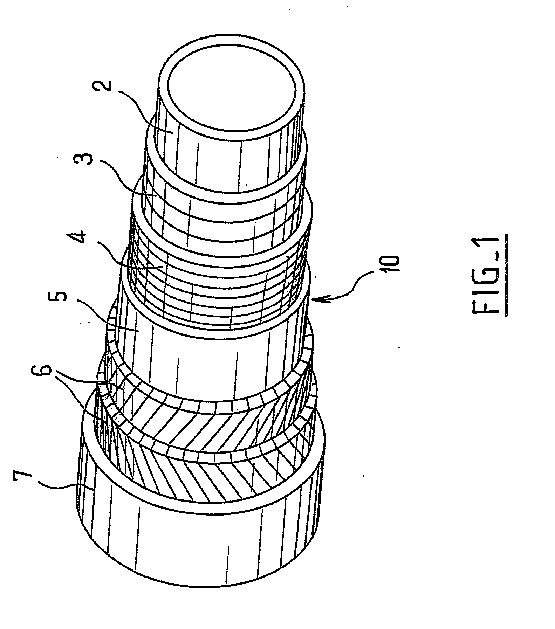

La conduite "smooth bore" 10 de la figure 1 comprend, de l'intérieur vers l'extérieur, une gaine d'étanchéité interne polymérique 2, une voûte métallique 3 constituée par l'enroulement en hélice à pas court d'au moins un fil métallique de forme (par exemple en zeta auto-agrafé), le cas échéant une frette 4 constituée par un enroulement à pas court de fil rectangulaire, une gaine intermédiaire 5 anti-écrasement (anti-"collapse"), une armure 6 résistant à la traction axiale dans le sens longitudinal de la conduite et constituée d'une paire de nappes d'armures croisées d'enroulement à pas long en sens contraire, et une gaine d'étanchéité externe polymérique 7.

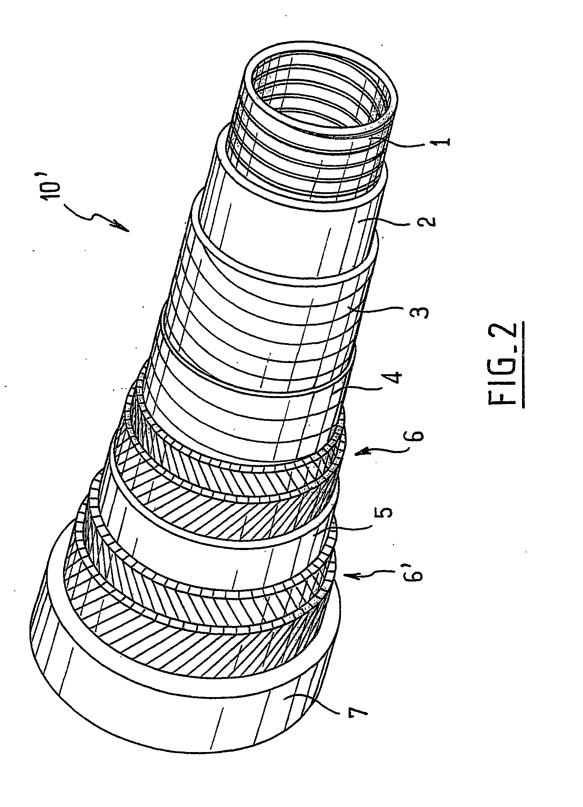

La conduite "rough bore" 10' de la figure 2 comprend, de l'intérieur vers l'extérieur, une carcasse 1 en feuillard agrafé, une gaine d'étanchéité interne polymérique 2, une voûte métallique 3 constituée par l'enroulement en hélice à pas court d'au moins un fil métallique de forme (par exemple en zeta auto-agrafé), le cas échéant une frette 4 constituée par un enroulement à pas court de fil rectangulaire, une première armure 6 résistant à la traction axiale dans le sens longitudinal de la conduite et constituée d'une paire de nappes d'armures croisées d'enroulement à pas long en sens contraire, une gaine intermédiaire 5 anti-écrasement (anti-"collapse"), une seconde armure 6' également constituée d'une paire de nappes d'armures croisées d'enroulement à pas long en sens contraire, et une gaine d'étanchéité externe polymérique 7.

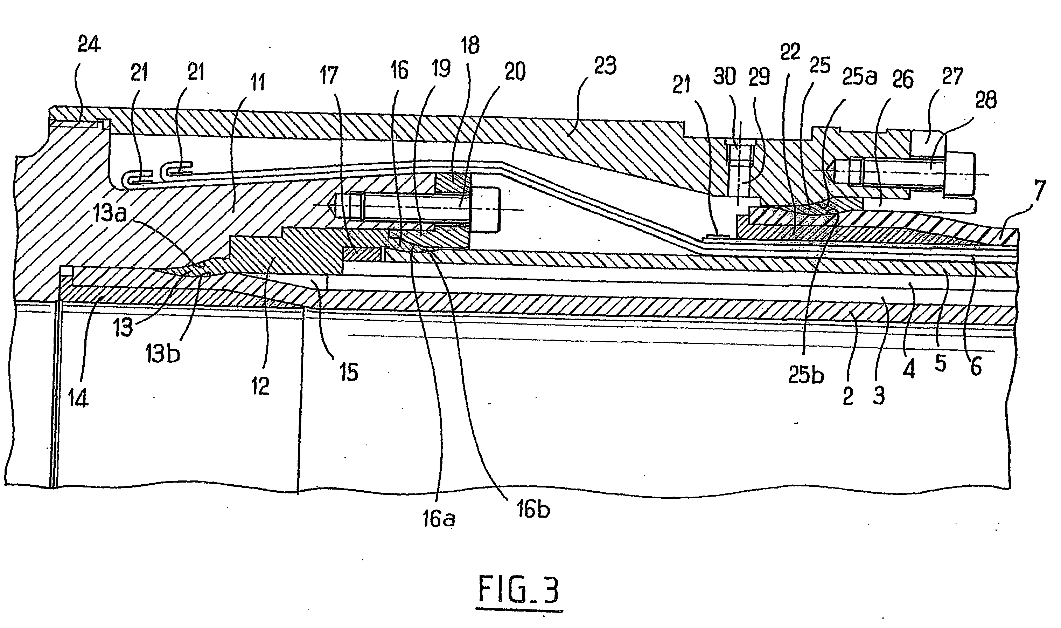

Le figure 3 montre l'agencement d'un embout 11 déjà développé par la Demanderesse, l'embout n'étant représenté que par sa partie annulaire arrière ou voûte, comportant une paroi intérieure cylindrique étagée sur laquelle peut coulisser et s'appuyer une pièce 12 dite bicône étagé. Ce bicône 12 comporte à l'avant une lèvre effilée de sertissage 13 susceptible de glisser sur une portée conique 13a de l'embout 11, lorsqu'elle subit une poussée axiale, pour venir former un renflement annulaire 13b vers l'intérieur qui vient mordre dans la gaine intérieure 2 serrée entre la voûte de l'embout 11 et une canule avant 14 effilée vers l'arrière. Une bague d'arrêt 15 est interposée entre la gaine 2 et le bicône 12 et sert d'appui à la voûte 3 de la conduite. A l'arrière du bicône 12, une lèvre effilée de sertissage 16 est susceptible de glisser sur une portée conique 16a d'une pièce liée l'embout 11 (la bride 18), lorsqu'elle subit une poussée axiale, pour venir former un renflement annulaire 16b vers l'intérieur qui vient mordre dans la gaine intermédiaire 5. Une bague d'arrêt 17 bloque la frette 4 contre le bicône 12. Une bride annulaire 18 présentant une jupe annulaire 19 coopérant avec la lèvre 16 est fixée sur l'embout 11 grâce à des vis 20. Le serrage de la bride 18 par les vis 20 entraîne à la fois le sertissage de la lèvre avant 13 dans la gaine intérieure et celui de la lèvre arrière 16 dans la gaine intermédiaire.

Des colliers 21 bloquent les armures 6 en position et une canule arrière 22 s'introduit entre la gaine extérieure 7 et les armures 6. Un capot cylindrique 23 est vissé par un filetage 24 autour de l'embout 11. Un monocône d'étanchéité en forme de bague 25 est poussé axialement par la jupe annulaire 25 d'une bride 27 se vissant sur le capot 23 par des vis 28, et glisse sur la butée conique 25a pour former un renflement radial 25b qui mord dans la gaine extérieure 7..

Le capot comporte un ou plusieurs orifices normalement fermés par un bouchon 30, ces orifices servant à injecter une résine (par exemple Araldite ®) dans l'embout.

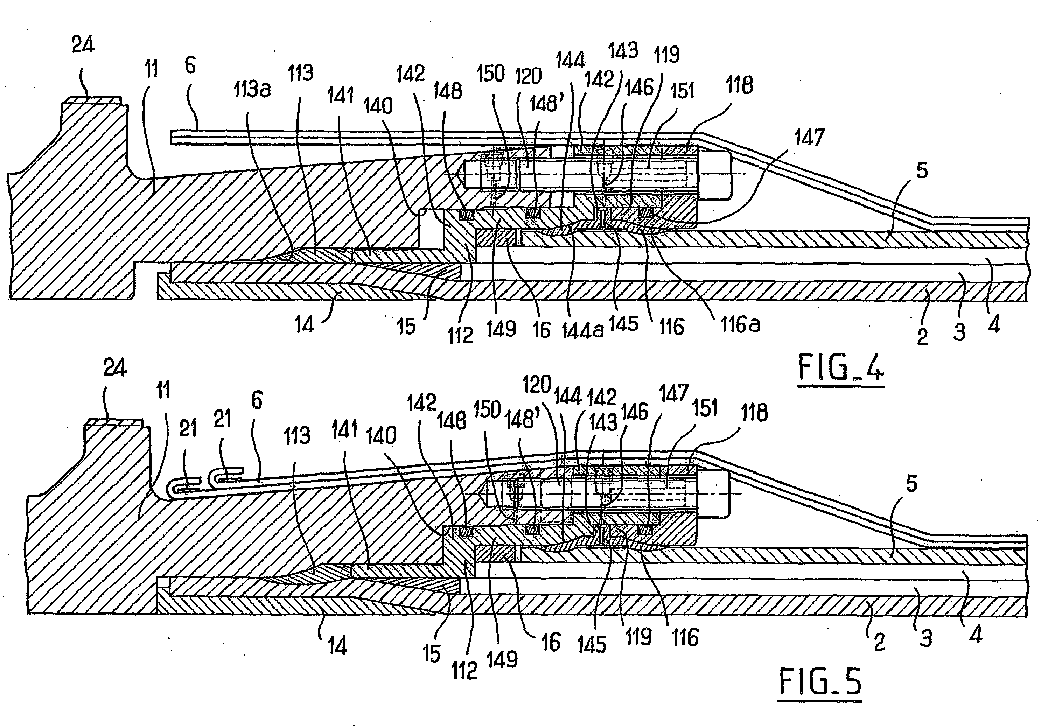

L'invention sera maintenant décrite en référence aux figures 4 et 5 sur lesquels des éléments identiques à ceux des figures précédentes portent les mêmes repères.

Le bicône étagé 12 est remplacé par une pièce étagée 112 susceptible de coulisser contre la paroi cylindrique 140 de l'embout 11 et de venir se bloquer contre un épaulement intérieur. La pièce 112 comprend à l'avant une partie de jupe cylindrique 141 qui peut venir pousser axialement une douille ou bague de sertissage ou monocône 113 entourant la gaine intérieure 2. Le monocône 113 coopère par une surface conique avec une surface de butée conique 113a (éventuellement bombée). La pièce 112 comprend à l'arrière une bride 142 sur laquelle peut venir se fixer par des vis 151 une bride 118 dont la jupe 119 coopère avec la lèvre arrière 116 d'un bicône 143 comportant une lèvre 144 vers l'avant. Le bicône 143 comporte un orifice radial 145 communiquant avec un orifice radial 146 pratiqué dans la bride 142 et qui peut être fermé par un bouchon.

Un joint torique 147 forme l'étanchéité entre la jupe 119 de la bride 18 et la paroi cylindrique intérieure de la bride 142 de la pièce étagée 112. Deux joints toriques 148, 148' sont disposés entre la partie centrale cylindrique 149 de la pièce étagée 112 et la paroi 140 de l'embout 11. Un orifice radial 150 obturable par un bouchon est prévu pour tester l'étanchéité de l'espace compris entre les deux joints toriques 148, 148'. Le joint torique 148 est prévu pour stopper les éventuelles fuites entre la pièce étagée 112 et la voûte de l'embout 11. En effet, si la gaine externe est percée, l'eau s'infiltre dans l'annulaire entre cette gaine et la gaine intermédiaire 5. Au niveau de l'embout, la résine présente dans l'embout empêche normalement l'eau de s'infiltrer ; toutefois, pour le cas où l'eau réussirait à s'infiltrer entre la pièce étagée et la voûte de l'embout, en passant entre le monocône 113 et la jupe 141, on a prévu le joint torique 148, le joint 148' n'étant là que pour permettre d'effectuer le contrôle du joint 148.

Des vis 120 permettent de rapprocher et de fixer l'ensemble des brides 118, 142 avec l'embout 11.

Le mode d'assemblage de l'embout de l'invention est le suivant.

On commence par serrer les vis 151 qui solidarisent la bride 118 sur la bride 142 de la pièce 112. Ce faisant, les lèvres 116 et 144 du bicône 143 coopèrent avec les surfaces obliques de butée conique correspondantes 116a et 144a formées respectivement sur la jupe 119 de la bride 118 et sur la pièce étagée 112 elle-même et se renflent et pénètrent dans la gaine 5. On procède grâce aux orifices 145, 146 à un contrôle de l'étanchéité de ces lèvres 116, 144, le joint torique 147 assurant qu'il n'y a pas de fuite entre la jupe 119 et la bride 142.

Lorsque le test précédent est satisfaisant, on teste alors l'étanchéité des joints 148, 148' grâce à l'orifice 150, ce qui permet de s'assurer que le joint d'arrêt 148 est efficace pour stopper les fuites qui passeraient éventuellement derrière le monocône 113, entre la pièce étagée 112 et la voûte de l'embout, le deuxième joint 148' n'ayant pas d'autre rôle que de permettre le test d'étanchéité.

Lorsque ce deuxième test est satisfaisant, on rapproche la voûte de l'embout 11 des brides solidarisées 118, 142 en serrant les vis 120. Le monocône 113 est poussé contre la surface de butée 113a et se déforme vers l'intérieur en mordant sur la gaine intérieure 2

On met à bonne longueur les armures 6 qu'on positionne avec un collier 21 et on remplit l'embout de résine.

## Revendications

1. Embout de fixation pour une conduite tubulaire flexible comprenant, de l'intérieur vers l'extérieur : une gaine d'étanchéité interne (2) réalisée en matière plastique, généralement polymère, une voûte de pression constituée par un enroulement (3) en hélice à pas court d'un fil de forme métallique, une gaine intermédiaire (5) et au moins une nappe d'armures de traction (6) enroulées à pas long et une gaine de protection et d'étanchéité externe (7), l'embout comportant une pièce étagée (112) pouvant coulisser dans un logement cylindrique étagé de l'embout (11) et destinée à assurer, grâce à deux éléments déformables de sertissage (113, 116), à l'avant la fixation étanche de la gaine interne (2) et à l'arrière la fixation étanche de la gaine intermédiaire (5), des vis (120) permettant le rapprochement et la fixation de la pièce étagée (112) sur l'embout (11), **caractérisé en ce que** la pièce étagée (112) et lesdits éléments déformables de sertissage (113, 116) forment trois éléments distincts.

2. Embout selon la revendication 1, **caractérisé en ce que** l'élément déformable arrière (116) est serré sur la gaine intermédiaire (5) par le serrage d'une bride (118) sur la pièce étagée (112) au moyen de vis (151).

3. Embout selon la revendication 2, **caractérisé en ce que** l'élément déformable arrière (116) appartient à un bicône (143) possédant un autre élément déformable (144) à l'avant s'appuyant également dans la gaine intermédiaire (5).

4. Embout selon la revendication 3, **caractérisé en ce que** le bicône (143) présente un orifice radial (145) de contrôle de l'étanchéité.

5. Embout selon la revendication 4, **caractérisé en ce qu'**il est prévu un joint torique (147) entre la bride (118) et la pièce étagée (112).

6. Embout selon l'une quelconque des revendications 1 à 5, **caractérisé en ce qu'**il est prévu deux joints toriques d'étanchéité (148, 148') entre la pièce étagée (112) et l'embout (11) ainsi qu'un orifice radial de contrôle de l'étanchéité entre ces joints (148, 148').

## Patentansprüche

1. Befestigungsarmatur für eine flexible Rohrleitung, die von innen nach außen umfasst: eine innere Dichtungshülle (2) aus Kunststoff, im allgemeinen aus Polymer, ein Druckgewölbe, das von einer schraubenförmigen Wicklung (3) mit kleiner Steigung aus einem Metalldraht gebildet wird, eine Zwischenhülle (5) und mindestens einen Zugbewehrungsmantel (6), der mit großer Steigung gewickelt ist, und eine äußere Schutz- und Dichtungshülle (7), wobei die Armatur ein stufenförmiges Teil (112) aufweist, das in einem stufenförmigen zylindrischen Sitz der Armatur (11) verschiebbar ist und dafür vorgesehen ist, mittels zwei verformbarer Quetschverbindungselemente (113, 116) vom die dichte Befestigung der Innenhülle (2) und hinten die dichte Befestigung der Zwischenhülle (5) zu bewirken, und Schrauben (120) zum Heranführen und Befestigen des stufenförmigen Teils (112) an der Armatur (11), **dadurch gekennzeichnet, dass** das stufenförmige Teil (112) und die verformbaren Quetschverbindungselemente (113, 116) drei unterschiedliche Elemente bilden.

2. Armatur entsprechend Anspruch 1, **dadurch gekennzeichnet, dass** das hintere verformbare Element (116) durch das Aufquetschen eines Flansches (118) auf dem stufenförmigen Teil (112) mittels Schrauben (151) auf der Zwischenhülle (5) aufgequetscht wird.

3. Armatur entsprechend Anspruch 2, **dadurch gekennzeichnet, dass** das hintere verformbare Element (116) zu einem Doppelkegel (143) gehört, der ein weiteres vom verformbares Element (144) aufweist; das sich auch in der Zwischenhülle (5) abstützt.

4. Armatur entsprechend Anspruch 3, **dadurch gekennzeichnet, dass** der Doppelkegel (143) eine radiale Öffnung (145) zur Überprüfung der Dichtigkeit aufweist.

5. Armatur entsprechend Anspruch 4, **dadurch gekennzeichnet, dass** zwischen dem Flansch (118) und dem stufenförmigen Teil (112) eine O-Ring-Dichtung (47) vorgesehen ist.

6. Armatur entsprechend einem der Ansprüche 1 bis 5, **dadurch gekennzeichnet, dass** zwischen dem stufenförmigen Stück (112) und der Armatur (11) zwei O-Ring-Dichtungen (148, 148') sowie zwischen diesen Dichtungen (148,148') eine radiale Öffnung zur Überprüfung der Dichtigkeit vorgesehen sind.

## Claims

1. A fixing end-fitting for a flexible tubular pipe, comprising, from the inside outward, an internal sealing sheath (2) made of a plastic, generally a polymer, a pressure vault formed by a short-pitch helical winding (3) of a metal profile wire, an intermediate sheath (5), at least one tensile armor ply (6) wound with a long pitch and at least one external protective sealing sheath (7), the end-fitting including a stepped part (112) that can slide in a stepped cylindrical housing of the end-fitting (11) and is designed to ensure, through two deformable crimping elements (113, 116), that the internal sheath (2) is fixed and sealed at the front and that the intermediate sheath (5) is fixed and sealed at the rear, bolts (120) allowing the stepped part (112) to be brought up to the end-fitting (11) and fixed thereto, **characterized in that** the stepped part (112) and the said deformable crimping elements (113, 116) form three separate elements.

2. The end-fitting as claimed in claim 1, **characterized in that** the rear deformable element (116) is clamped to the intermediate sheath (5) by a flange (118) on the stepped part (112) being clamped by means of bolts (151).

3. The end-fitting as claimed in claim 2, **characterized in that** the rear deformable element (116) forms part of a bicone (143) possessing, at the front, another deformable element (114) that also presses into the intermediate sheath (5).

4. The end-fitting as claimed in claim 3, **characterized in that** the bicone (143) has a radial orifice (145) for checking the sealing.

5. The end-fitting as claimed in claim 4, **characterized in that** an O-ring seal (147) is provided between the flange (118) and the stepped part (112).

6. The end-fitting as claimed in any one of claims 1 to 5, **characterized in that** two O-ring seals (148, 148') are provided between the stepped part (112) and the end-fitting, and a radial orifice is provided for checking the sealing between these seals (148, 148').
